Europäisches Patentamt

European Patent Office

Office européen des brevets

(11) Veröffentlichungsnummer: **0 180 867**
A2

(12) # EUROPÄISCHE PATENTANMELDUNG

(21) Anmeldenummer: 85113572.3

(22) Anmeldetag: 25.10.85

(51) Int. Cl.⁴: **C 09 D 3/74**
C 08 L 27/08, C 08 F 214/08
//(C08F214/08, 220:04, 220:18,
220:26, 220:38, 220:54)

(30) Priorität: 08.11.84 DE 3440790

(43) Veröffentlichungstag der Anmeldung:
14.05.86 Patentblatt 86/20

(84) Benannte Vertragsstaaten:
AT BE CH DE FR GB IT LI NL SE

(71) Anmelder: BASF Aktiengesellschaft
Carl-Bosch-Strasse 38
D-6700 Ludwigshafen(DE)

(72) Erfinder: Penzel, Erich, Dr.
Carl-Bosch-Strasse 86
D-6700 Ludwigshafen(DE)

(72) Erfinder: Keller, Roland, Dr.
Adelsheimer Strasse 15
D-6800 Mannheim 51(DE)

(72) Erfinder: Haberkorn, Herbert, Dr.
Oberer Bergelweg 5
D-6718 Gruenstadt(DE)

(54) Stabile wässrige Dispersionen von Vinylidenchloridcopolymerisaten und deren Verwedung.

(57) Stabile wäßrige Dispersionen von Vinylidenchloridcopolymerisaten zum Beschichten von Gegenständen unter Ausbildung von darauf gut haftenden, homogenen und heißsiegelbaren Filmen, die rasch kristallisieren, wobei das Vinylidenchloridcopolymerist aus (a) 84 bis 90 Gew.-% Vinylidenchlorid; (b) 4 bis 10 Gew.-% Methylmethacrylat; (c) 3 bis 8 Gew.-% eines Hydroxyalkyl(meth)acrylats; (d) 0,5 bis 2,5 Gew.-% Acrylamidopropansulfonsäure und/oder eines Sulfo(meth)acrylats; (e) 0,5 bis 3 Gew.-% einer ethylenisch ungesättigten $C_3$- bis $C_5$-Carbonsäure und/oder eines Amids einer ethylenisch ungesättigten $C_3$- bis $C_5$-Carbonsäure; (f) 0 bis 2 Gew.-% einer mindestens 2 ethylenisch ungesättigte, nicht konjugierte Doppelbindungen enthaltenden Verbindung als Vernetzer einpolymerisiert enthält und wobei das Gewichtsverhältnis (b) : (c) im Copolymerisat 1 : 0.5 bis 3 beträgt. Die Dispersionen werden als Beschichtungsmittel für Folien and Hohlkörper aus Polyester, Polyvinylchlorid, Polyamid und Polyolefinen verwendet.

EP 0 180 867 A2

0180867

Stabile wäßrige Dispersionen von Vinylidenchloridcopolymerisaten und deren Verwendung

Stabile wäßrige Dispersionen von Vinylidenchloridcopolymerisaten sind bekannt. Sie werden beispielsweise zur Beschichtung von Papier, Pappe und Folien verwendet. Diese Beschichtungen weisen eine hohe Dichtigkeit gegenüber Gasen, wie Sauerstoff und Kohlendioxid, Wasserdampf, Ölen und organischen Lösungsmitteln auf. Die beschichteten Materialien sind aufgrund der guten Barriereeigenschaften für die Verpackung von Lebensmitteln und Pharmazeutika geeignet. Es ist bekannt, daß man die Barriereeigenschaften der Beschichtungen verbessern kann, wenn man den Anteil des Vinylidenchlorids in der Dispersion der Vinylidenchloridcopolymerisate möglichst weit heraufsetzt. Die Vinylidenchloridmenge im Copolymerisat kann jedoch nicht bliebig erhöht werden, weil man ab einer bestimmten Vinylidenchloridkonzentration Dispersionen erhält, bei denen die Kristallisation bereits im Latex beginnt. Aus solchen Dispersionen kann man keine homogenen Beschichtungen mit guten Barriereeigneschaften mehr herstellen.

Eine handelsübliche stabile Vinylidenchloridcopolymerisat-Dispersion enthält beispielsweise 80 Gew.-% Vinylidenchlorid, 10 Gew.-% Methylmethacrylat, 8 Gew.-% Hydroxyethylacrylat und 2 Gew.-% eines Hilfsmonomeren, z.B. Acrylamidopropansulfonsäure, einpolymerisiert. Solche Vinylidenchloridcopolymerisat-Dispersionen kristallisieren nicht. Ebenso verhalten sich auch die daraus hergestellten Beschichtungen auf Polyolefinfolien. Die Beschichtungen kristallisieren auch dann nicht, wenn sie längere Zeit bei 85°C getempert werden.

Aus der DE-PS 20 19 462 ist eine stabile wäßrige Dispersion eines Vinylidenchloridcopolymerisates bekannt, das 70 bis 95 Gew.-% Vinylidenchlorid einpolymerisiert enthält und zur Herstellung von Überzügen auf Polyolefinfolien verwendet wird. Gemäß den Angaben in den Beispielen enthält das Copolymerisat als weitere wesentliche Monomere immer Methylacrylat und Hydroxyethylacrylat, sowie ein Hilfsmonomer einpolymerisiert. Das Hilfsmonomer kann beispielsweise Natrium-2-Sulfoethylmethacrylat oder Acrylsäure sein. Die Haftfestigkeit und die Barriereeigenschaften von Überzügen, die unter Verwendung dieser Vinylidenchloridcopolymerisat-Dispersionen hergestellt werden, ist noch verbesserungsbedürftig.

Aufgabe der Erfindung ist es, Vinylidenchloridcopolymerisat-Dispersionen zur Verfügung zu stellen, die beim Beschichten von Gegenständen darauf gut haftende, homogene und heißsiegelbare Filme ausbilden, die rasch Ks/P kristallisieren und die - verglichen mit Filmen aus bekannten Vinylidenchloridcopolymerisat-Dispersionen - gegenüber Gasen verbesserte Sperreigenschaften und auch eine verbesserte Haftung auf der Unterlage aufweisen.

Die Aufgabe wird erfindungsgemäß gelöst, wenn das Vinylidenchloridcopolymerisat

    (a)   84 bis 90 Gew.-% Vinylidenchlorid,
    (b)   4 bis 10 Gew.-% Methylmethacrylat,
    (c)   3 bis 8 Gew.-% Hydroxyethylacrylat, Hydroxypropylacrylat, Hydroxyethylmethacrylat und/oder Hydroxypropylmethacrylat,
    (d)   0,5 bis 2,5 Gew.-% Acrylamidopropansulfonsäure und/oder eines Sulfo-
         (meth)acrylats,
    (e)   0,5 bis 3 Gew.-% einer ethylenisch ungesättigten $C_3$- bis $C_5$-Carbon-
         säure und/oder eines Amids einer ethylenisch ungesättigten $C_3$- bis
         $C_5$-Carbonsäure
    (f)   0 bis 2 Gew.-% einer mindestens 2 ethylenisch ungesättigte, nicht
         konjugierte Doppelbindung enthaltenden Verbindungen als Vernetzer

einpolymerisiert enthält und wobei das Gewichtsverhältnis (b) : (c) im
Copolymerisat 1 : 0,5 bis 3 beträgt.

Das Vinylidenchloridcopolymerisat enthält vorzugsweise 86 bis 89 Gew.-%
Vinylidenchlorid, 4 bis 10 Gew.-% Methylmethacrylat, 3 bis 8 Gew.-% der
Hydroxyalkyl(meth)acrylate und 0,5 bis 3,5 Gew.-% Acrylamidopropansulfonsäure und/oder Sulfopropylacrylsäureester sowie 0,5 bis 3 Gew.-% Acrylsäure, Methacrylsäure und/oder Acrylamid, Methacrylamid einpolymerisiert,
wobei die Summe der Gewichtsprozente 100 beträgt. Das Gewichtsverhältnis
der Monomereinheiten (b) : (c) beträgt vorzugsweise 1 : 0,75 bis 1,5.

Als Monomere der Gruppe (d) kommen Acrylamidopropansulfonsäure in Betracht, wie 2-Acrylamido-2-methylpropansulfonsäure und/oder Sulfo(meth)-
acrylate, wie 3-Sulfopropylacrylatsäureester, Sulfoethylacrylat, Sulfoethylmethacrylat, 3-Sulfopropylmethacrylsäureester und Bis(3-Sulfopropyl)-itaconsäureester. Aus dieser Monomerengruppe wird vorzugsweise
2-Acrylamido-2-methylpropansulfonsäure verwendet bzw. deren Alkalisalze.

Monomere der Gruppe (e) sind ethylenisch ungesättigte $C_3$- bis $C_5$-Carbon-
säuren und deren Amide. Die in Betracht kommenden Säuren können entweder
allein oder in Mischung mit einem geeigneten Amid im Copolymerisat enthalten sein. Geeignete Säuren sind z.B. Acrylsäure, Methacrylsäure, Itaconsäure und Crotonsäure. Sie können allein oder als Gemisch bei der Polymerisation eingesetzt werden. Von den Amiden werden vorzugsweise Acrylamid und Methacrylamid verwendet. Die Monomeren der Gruppe (d) sowie die
ethylenisch ungesättigten Carbonsäuren der Gruppe (e) werden in partiell
oder vollständig neutralisierter Form als Ammonium- oder Alkalisalze oder
in nicht neutralisierter Form bei der Polymerisation eingesetzt.

Das Copolymerisat kann außerdem als Monomer der Gruppe (f) bis zu
2 Gew.-% einer mindestens 2 ethylenisch ungesättigte, nichtkonjugierte
Doppelbindungen enthaltenden Verbindungen als Vernetzer einpolymerisiert
enthalten, z.B. Di- oder Triacrylate bzw. die entsprechenden Acrylamide
und Methacrylamide, z.B. Butandioldiacrylat, Butandioldimethacrylat,
Glykoldiacrylat, Glykoldimethacrylat, Triethylenglykoldiacrylat, Triethylenglykoldimethacrylat, Methylenbisacrylamid, Methylenbismethacrylamid
und Allylacrylat.

Der Beginn der Kristallisation von Filmen, die aus den Vinylidenchloridcopolymerisat-Dispersionen hergestellt werden, läßt sich zunächst durch
die Menge an einpolymerisiertem Vinylidenchlorid einstellen. Mit steigendem Vinylidenchloridgehalt im Copolymerisat bei sonst gleichen Comonomeren nimmt bekanntlich die Kristallisationsgeschwindigkeit von daraus
hergestellten Filmen zu. Bei Mischpolymerisaten, die 90 Gew.-% Vinylyidenchlorid enthalten, ist die Kristallisationsgeschwindigkeit von daraus
hergestellten Filmen sehr hoch. Sie ist, gemessen bei einer Temperatur
von 45°C, bereits nach wenigen Minuten abgeschlossen. Dagegen kristallisieren Mischpolymerisate mit weniger als 83 Gew.-% Vinylidenchlorid in
Form des Films sehr langsam, wenn überhaupt. Das Einpolymerisieren von
Di- und Triacrylaten bzw. Acrylamiden beschleunigt die Kristallisation
von Filmen, die aus den beanspruchten Dispersionen hergestellt werden
deutlich und steigert darüber hinaus die mechanischen Eigenschaften der
Beschichtungen. Die Vernetzer können jedoch nur in einer solchen Menge
eingebaut werden, daß die Polymerpartikel bei der Filmbildung noch einen
zusammenhängenden homogenen Film bilden.

Die Vinylidenchloridcopolmeriste werden nach bekannten Verfahren durch
Emulsionspolymerisation der Monomerengemische bei Temperaturen bis zu
100°C in Gegenwart von radikalischen Polymerisationsinitiatoren hergestellt. Wie bei der Emulsionspolmerisation üblich, verwendet man anionische und/oder nichtionische Tenside. Da diese Verbindung jedoch bei der
Anwendung der Dispersionen nach der Filmbildung häufig als Trennmittel
wirken und dadurch die Haftung der Filme auf den Substraten beeinträchtigen, verwendet man bei der Polymerisation nur die für die Teilchenbildung
unbedingt notwendige Menge an Tensiden. Die mechanische Stabilität der
Vinylidenchlorid-Dispersion wird durch sogenannten einpolymerisierbare

0180867

Emulgatoren, d.h. die unter (d) und (e) angegebenen Monomeren erreicht. Diese Monomeren können allein, z.B. Acrylamidopropansulfonsäure und Acrylsäure oder auch in Mischung bei der Polymerisation eingesetzt werden, z.B. Mischungen aus Acrylamidopropansulfonsäure und Acrylsäure und Acrylamid oder Mischungen aus Acrylamidopropansulfonsäure und Methacrylsäure und Acrylamid sowie Mischungen aus Acrylamidopropansulfonsäure und Acrylsäure und Methacrylamid.

Als Initiatoren werden bekannte organische oder anorganische Peroxide oder Redox-Initiatoren verwendet. Die Polymerisationstemperatur richtet sich nach dem verwendeten Initiatorsystem und liegt vorzugsweise zwischen 50 und 70°C. Man erhält Dispersionen mit reproduzierbaren Eigenschaften, wenn man einen Teil der Monomerenemulsion in das Reaktionsgefäßt einbringt, die Polymerisation startet und anschließend die restliche Monomerenemulsion im Verlauf von mehreren Stunden kontinuierlich zuführt.

Die oben beschriebenen Vinylidenchloridcopolymerisat-Dispersionen werden als Beschichtungsmittel für Folien und Hohlkörper aus Polyester, Polyvinylchlorid, Polyamid und Polyolefinen verwendet. Als Polyolefine kommen hauptsächlich Polyethylen und Polypropylen in Betracht. Bei den Kunststoffbehältern handelt es sich in erster Linie um Flaschen. Hier kann die Beschichtung sowohl innen als auch außen erfolgen. Vorzugsweise werden die Kunststoffbehälter jedoch außen beschichtet. Nach dem Beschichten der Folien bzw. Behälter mit den wäßrigen Dispersionen wird das Wasser durch Zufuhr von Wärme, z.B. Erhitzen im Heißluftstrom bzw. Einwirkung von IR-Strahlung, verdampft. Je nach Zusammensetzung des Vinylidenchloridcopolymerisates und aufgrund einer geeigneten Temperaturführung kann nach der Beschichtung von Gegenständen erreicht werden, daß das Vinylidenchloridcopolymerisat nach Beendigung der Wärmebehandlung kristallisiert ist. Die Haftung des Films auf der Oberfläche des beschichteten Gegenstandes ist dann so fest, daß der Film mechanisch nicht mehr davon entfernt werden kann. Als rasch kristallisierend werden Vinylidenchloridcopolymerisatfilme bezeichnet, die bei einer Temeratur von 45°C nach einer Zeit bis 120 Minuten vollständig kristallisiert sind.

Die Kristallisation der Vinylidenchloridcopolymerisat-Filme wurde mit Hilfe der Oberflächen-Reflektions-IR-Sprektroskopie bestimmt. Die Messungen wurden dabei in Abhängigkeit von der Zeit bei 45°C durchgeführt. Der Beginn der Kristallisation wurde durch Extrapolation erhalten und mit $t_0$ bezeichnet. Die Sauerstoff-Permeabilität der beschichteten Gegenstände wurde nach DIN 53 380 bei 23°C und 0 % relativer Feuchte bestimmt. Man erhält die Sauerstoff-Durchlässigkeit in $cm^3/m^2$ . d . bar. Durch Umrech-

BASF Aktiengesellschaft — 5 — C Z. 0050/37433

0180867

nung auf eine Schichtdicke von 100 μm wird die Sauerstoffpermeabilität in $cm^3$ . 100 μm/$m^2$ . d . bar erhalten.

Der LD-Wert ist die Lichtdurchlässigkeit einer auf 0,01 Gew.-% verdünnten Probe bei einer Schichtdicke von 2,5 cm und einer Wellenlänge des eingetrahlten Lichtes von 0,546 μm verglichen mit Wasser = 100 %. Die minimale Filmbildetemperatur wurde nach DIN 53 787 bestimmt.

Die in den Beispielen angegebenen Teile sind Gewichtsteile, die Angaben in % beziehen sich mit Ausnahme des LD-Werts auf das Gewicht des Mischpolymerisates.

## Beispiel 1

Als Reaktionsgefäßt wird ein 80 l fassender Kessel verwendet, der für das Arbeiten bis zu einem Druck von 20 bar ausgelegt und mit einem Rührer und zwei Zulaufgefäßen ausgestattet ist. Der Kessel ist mit Dampf beheizbar und kann bei Bedarf mit Wasser gekühlt werden. Zulauf I enthält eine wäßrige Monomerenemulsion aus 16,3 kg (90 %) Vinylidenchlorid, 0,82 kg (4,5 %) Methylmethacrylat, 0,63 kg (3,5 %) Hydroxypropylacrylat, 0,18 kg (1 %) Acrylsäure, 0,09 kg (0,5 %) Methacrylamid, 0,09 kg (0,5 %) des Natriumsalzes der Acrylamidopropansulfonsäure, 0,27 kg Natriumlaurylsulfat und 13,3 kg Wasser. Zulauf II ist eine Lösung von 0,04 kg hydroxymethansulfinsaurem Natrium in 0,8 kg Wasser.

Im Kessel werden 7,5 kg Wasser und 0,07 kg Kaliumpersulfat vorgelegt. Anschließend wird 3 mal mit 5 bar Stickstoff abgepreßt, entspannt und 2,3 l des Zulaufs I in den Kessel eingebracht. Der Inhalt des Kessels wird auf eine Temperatur von 60°C aufgeheizt. Sobald eine Temperatur von 45° erreicht ist, gibt man die Zuläufe I und II kontinuierlich im Verlauf von 4 Stunden zu. Danach wird das Reaktionsgemisch weitere 3 Stunden auf 60°C gehalten und anschließend 1 Stunde mit Stickstoff gespült. Nach dem Abkühlen wird die erhaltene Dispersion über ein Filter abgelassen. Der Feststoffgehalt beträgt 45 % der pH-Wert 1,2, der LD-Wert 75 %, die minimale Filmbildetemperatur 7°C, $t_0$ = 0,4 Stunden und die Sauerstoff--Permeabilität 0,14 $cm^3$ . 100 μm/$m^2$ . d . bar.

## Beispiel 2

Das Beispiel 1 wird mit der Ausnahme wiederholt, daß man als Zulauf I eine Mischung von 15,48 kg (86 %) Vinylidenchlorid, 1,62 kg (9 %) Methylmethacrylat, 0,54 kg (3 %) Hydroxyethylacrylat, 0,18 kg (1 %) Acrylsäure, 0,05 kg (0,3 %) Methacrylamid, 0,09 kg (0,5 %) des Kaliumsalzes des

0180867

Sulfopropylacrylsäureesters, 0,04 kg (0,2 %) Methylenbisacrylamid, 0,27 kg Natriumlaurylsulfat und 13,3 kg Wasser besteht. Man erhält eine Vinylidenchloridcopolymerisat-Dispersion mit einem Feststoffgehalt von 45,5 %, einem pH-Wert von 1,3 und einem LD-Wert von 64 %. Die minimale Filmbildetemperatur beträgt 21°C, $t_0$ = 25 Stunden, die Sauerstoff-Permeabilität 0,25 cm$^3$ . 100 $\mu$m/m$^2$ . d . bar.

Beispiel 3

Beispiel 1 wird mit der Ausnahme wiederholt, daß man als Zulauf I eine Mischung aus 15,48 kg (86 %) Vinylidenchlorid, 0,72 kg (4 %) Methylmethacrylat, 1,44 kg (8 %) Hydroxyethylacrylat, 0,18 kg (1 %) Acrylsäure, 0,09 kg (0,5 %) Methacrylamid, 0,09 kg (0,5 %) des Kaliumsalzes des Sulfopropylmethacrylsäureesters, 0,27 kg Laurylsulfat und 13,3 kg Wasser einsetzt.

Man erhält eine Vinylidenchloridcopolymerisat-Dispersion mit einem Feststoffgehalt von 45,5 %, einem pH-Wert von 1,5 und einem LD-Wert von 46. Die minimale Filmbildtemperatur beträgt 10°C, $t_0$ = 0,3 Stunden und die Sauerstoff-Permeabilität 0,22 cm$^3$ . 100 $\mu$m/m$^2$ . d . bar.

Beispiel 4

Das Beispiel 1 wird mit der Ausnahme wiederholt, daß man als Zulauf I eine Mischung aus 15,21 kg (84,5 %) Vinylidenchlorid, 1,17 kg (6,5 %) Methylmethacrylat, 0,99 kg (5,5 %) Hydroxyethylmethacrylat, 0,18 kg (1 %) Acrylsäure, 0,09 kg (0,5 %) Acrylamid, 0,36 kg (2 %) des Natriumsalzes der Acrylamidopropansulfonsäure, 0,27 kg Natriumlaurylsulfat und 13,3 kg Wasser einsetzt.

Man erhält eine Vinylidenchloridcopolymerisat-Dispersion mit einem Feststoffgehalt von 45,6 %, einem pH-Wert von 1,3 und einem LD-Wert von 58 %. Die minimale Filmbildetemperatur beträgt 15°C, $t_0$ = 1,5 Stunden und die Sauerstoff-Permeabilität 0,25 cm$^3$ . 100 $\mu$m/m$^2$ . d . bar.

Beispiel 5

Das Beispiel 1 wird mit der Ausnahme wiederholt, daß man als Zulauf I eine Mischung aus 15,84 kg (88 %) Vinylidenchlorid, 0,99 kg (5,5 %) Methylmethacrylat, 0,81 kg (4,5 %) Hydroxypropylmethacrylat, 0,18 kg (1 %) Acrylsäure, 0,09 kg (0,5 %) Acrylamid, 0,09 kg (0,5 %) des Natriumsalzes der Acrylamidopropansulfonsäure, 0,27 kg Natriumlaurylsulfat und 13,3 kg Wasser einsetzt.

Man erhält eine Vinylidenchloridcopolymerisat-Dispersion mit einem Feststoffgehalt von 46,5 %, einem pH-Wert von 1,3 und einem LD-Wert von 73 %. Die minimale Filmbildetemperatur beträgt 16°C, $t_0$ = 4,2 Stunden und die Sauerstoff-Permeabilität 0,17 $cm^3$ . 100 $\mu m/m^2$ . d . bar.

## Beispiel 6

Das Beispiel 1 wird mit der Ausnahme wiederholt, daß man als Zulauf I eine Mischung aus 88 % Vinylidenchlorid, 5,5 % Methylmethacrylat, 4,5 % Hydroxyethylacrylat, 1 % Acrylsäure, 0,5 % Methacrylamid und 0,5 % Acrylamidopropansulfonsäure in 13,3 kg Wasser einsetzt, das 0,27 kg Na-laurylsulfat enthält. Man erhält eine stabile wäßrige Dispersion mit einem Feststoffgehalt von 44,7 %, einem pH-Wert von 1,2 und einem LD-Wert von 70 %. Die minimale Filmbildetemperatur beträgt 14°C, $t_0$ = 1,8 Stunden, die Sauerstoffpermeabilität = 0,11 $cm^3$ . 100 $\mu m/m^2$ . d . bar.

## Vergleichsbeispiel 1

Das Beispiel 6 wird mit der Ausnahme wiederholt, daß im Zulauf I anstelle von Methylmethacrylat dieselbe Menge an Methylacrylat verwendet wird. In diesem Fall erhielt man eine stabile wäßrige Dispersion eines Copolymerisates aus 88 % Vinylidenchlorid, 5,5 % Methacrylat, 4,5 % Hydroxyethylacrylat, 1 % Acrylsäure, 0,5 % Methacrylamid und 0,5 % Acrylamidopropansulfonsäure. Der Feststoffgehalt der Dispersion beträgt 44,9, der pH-Wert 1,2 und der LD-Wert 86 %. Die minimale Filmbildetemperatur liegt bei 13°C, $t_0$ = 1 Stunde, die Sauerstoffpermeabilität = 0,21 . 100 $\mu m/m^2$ . d . bar.

## Vergleichsbeispiel 2

Gemäß der Lehre der DE-PS 20 19 462 wurde nach der im Beispiel 1 der vorliegenden Anmeldung angegebenen Herstellvorschrift ein Copolymerisat aus 80 % Vinylidenchlorid, 10 % Hydroxyethylacrylat, 9 % Methacrylat und 1 % Acrylamidopropansulfonsäure hergestellt. Man erhielt eine Dispersion mit einem Feststoffgehalt von 44,8 %, einem pH-Wert von 1,5 und einem LD-Wert von 90 %. Die minimale Filmbildetemperatur betrug 19°C, $t_0$ lag oberhalb von 50 Stunden, die Sauerstoffpermeabilität betrug 0,50 $cm^3$ . 100 $\mu m/m^2$ . d . bar. Mischpolymerisate dieser Art kristallisieren nicht. Die Messungen wurden nach 50 Stunden abgebrochen.

0180867

### Vergleichsbeispiel 3

Vergleichsbeispiel 2 wurde mit der Ausnahme wiederholt, daß man das Methylmethacrylat im Zulauf I durch Methylmethacrylat ersetzte. Man erhielt eine wäßrige Dispersion mit einem Feststoffgehalt von 46 %, eine pH-Wert von 1,3 und einem LD-Wert von 58 %. Die minimale Filmbeildetemperatur lag bei 18°C, $t_0$ betrug mehr als 50 Stunden, die Sauerstoffpermeabilität betrug 0,24 cm$^3$ . 100 μm/m$^2$ . d . bar. Auch diese Polymerdispersion war nicht kristallisationsfähig. Die Messung wurde nach 50 Stunden abgebrochen.

### Vergleichsbeispiel 4

Gemäß der Lehre der DE-PS 20 19 462 wurde nach der im Beispiel 1 angegebenen Vorschrift ein Copolymerisat aus 85 % Vinylidenchlorid, 4 % Methacrylat, 10 % Hydroxyethylacrylat und 1,5 % Acrylamidopropansulfonsäure hergestellt. Die Dispersion ließ sich zwar herstellen, war aber bereits nach wenigen Tagen koaguliert, so daß damit keine Beschichtungen mehr für Permeabilitätsmessungen hergestellt werden konnten.

0180867

Patentansprüche

1. Stabile wäßrige Dispersionen von Vinylidenchlorid-Copolymerisaten zum Beschichten von Gegenständen unter Ausbildung von darauf gut haftenden, homogenen und heißsiegelbaren Filmen, die rasch kristallisieren, dadurch gekennzeichnet, daß das Vinylidenchloridcopolymerisat

(a) 84 bis 90 Gew.-% Vinylidenchlorid,

(b) 4 bis 10 Gew.-% Methylmethacrylat,

(c) 3 bis 8 Gew.-% Hydroxyethylacrylat, Hydroxypropylacrylat, Hydroxyethylmethacrylat und/oder Hydroxypropylmethacrylat,

(d) 0,5 bis 2,5 Gew.-% Acrylamidopropansulfonsäure und/oder eines Sulfo(meth)acrylats,

(e) 0,5 bis 3 Gew.-% einer ethylenisch ungesättigten $C_3$- bis $C_5$-Carbonsäure und/oder eines Amids einer ethylenisch ungesättigten $C_3$- bis $C_5$-Carbonsäure, und

(f) 0 bis 2 Gew.-% einer mindestens 2 ethylenisch ungesättigte, nicht konjugierte Doppelbindungen enthaltenden Verbindung als Vernetzer

einpolymerisiert enthält und wobei das Gewischtsverhältnis (b) : (c) im Copolymerisat 1 : 0,5 bis 3 beträgt.

2. Verwendung der stabilen wäßrigen Dispersionen nach Anspruch 1, als Beschichtungsmittel für Folien und Hohlkörper aus Polyester, Polyvinylchlorid, Polyamid und Polyolefinen.